# FASCICULE DE BREVET EUROPEEN

(11) **EP 0 681 011 B1**
(45) Date de publication et mention de la délivrance du brevet: **04.11.1998**
(21) Numéro de dépôt: 95400601.1
(22) Date de dépôt: 20.03.1995
(51) Int. Cl.: C09D 5/24, B05D 3/14, B05D 7/14

(54) **Tôle prépeinte apte au soudage et procédé de fabrication d'une telle tôle**
Schweissbares, vorgestrichenes Stahlblech und Herstellungsverfahren
Weldable, prepainted metal sheet and process for making it

(30) Priorité: 04.05.1994 FR 9405572
(43) Date de publication de la demande: 08.11.1995
(73) Titulaire: SOLLAC S.A., 92800 Puteaux (FR)
(72) Inventeur: Guth, Jérôme, F-59140 Dunkerque (FR); Hellouin, Rémi, F-60500 Chantilly (FR)
(74) Mandataire: Ventavoli, Roger

(56) Documents cités:
- EP-A- 0 556 449
- US-A- 4 818 627
- DATABASE WPI Section Ch, Derwent Publications Ltd., London, GB; Class A82, AN 73-31904U & JP-B-48 017 535 (SHIN-NIPPON IRON AND STEE)

## Description

La présente invention concerne une tôle dite tôle prépeinte, constituée d'un substrat métallique revêtu si nécessaire d'un prétraitement anticorrosion, par exemple d'une petite couche d'un revêtement protecteur, et recouvert d'une couche de peinture, apte au soudage essentiellement au soudage par résistance par points, ainsi qu'un procédé pour la fabrication d'une telle tôle.

Avec la demande de plus en plus importante des constructeurs automobile et d'électroménager de disposer de tôles très bien protégées de la corrosion, les métallurgistes et les sidérurgistes ont été amenés à fabriquer des bobines de tôles revêtues d'un revêtement metallique protecteur anticorrosion, généralement à base de zinc, et même de tôles dites tôles prépeintes.

Ces tôles prépeintes sont constituées d'un substrat métallique prétraité anticorrosion et recouvert d'une couche de peinture.

Cette couche de peinture disposée sur la tôle revêtue directement après sa fabrication accroît encore la protection anti-corrosion, car elle constitue une couche faisant office de barrière supplémentaire, flexible, apte à subir les opérations de formage de la tôle.

L'avantage d'une telle tôle est particulièrement important pour les constructeurs automobiles car elle permet de fabriquer des carrosseries ou des éléments de carrosserie directement prêts à peindre sans passer par une étape de cataphorèse.

Ce revêtement supplémentaire déposé au-dessus du revêtement anticorrosion habituel, comme par exemple le zinc, les alliages à base de zinc ou le nickel et ses alliages, est un revêtement à base de polymère. Il n'est donc pas électriquement conducteur et ce type de tôle interdit le soudage pour assembler les diverses pièces nécessaires à la réalisation par exemple d'une carrosserie automobile.

Afin de pouvoir toutefois utiliser le soudage pour assembler entre-elles deux tôles prépeintes, une solution connue consiste à utiliser un polymère chargé de fines particules métalliques conductrices comme par exemple de poussières de zinc ou d'un autre métal, ou de phosphure de fer.

Ces particules conductrices permettent le passage du courant électrique et confèrent ainsi à la tôle prépeinte avec un tel polymère chargé une possibilité d'utiliser la technique du soudage, en particulier du soudage par résistance par point pour les assembler.

Il est connu d'utiliser des polymères chargés de particules de forme aléatoire dont la taille de grain est inférieure à 5 microns.

Pour qu'une telle tôle ait une bonne aptitude au soudage par résistance par point, il est nécessaire d'utiliser des polymères chargés dont la proportion de charges conductrices est importante pour garantir le contact entre elles de façon uniforme afin de donner un caractère conducteur au polymère.

Or la substitution d'une partie du polymère par des particules conductrices abaisse d'une part les propriétés anti-corrosion du revêtement et, d'autre part, les propriétés anti-gravillonnage du revêtement en diminuant sa souplesse à l'impact.

La présente invention concerne une tôle prépeinte ayant une bonne aptitude au soudage, essentiellement au soudage par résistance par point et conservant ses propriétés anti-corrosion et anti-gravillonnage.

La présente invention concerne plus particulièrement une tôle prépeinte se présentant sous forme d'une bobine et apte à être mise en forme, soudée et mise en peinture, constituée d'un substrat métallique revêtu sur au moins une de ses faces d'une couche de peinture organique, caractérisée en ce que la peinture est chargée de particules conductrices de l'électricité et magnétiques, de forme allongées, orientées perpendiculairement à la surface de la tôle.

Selon d'autres caractéristiques de l'invention :
- La longueur moyenne des particules conductrices est sensiblement égale à l'épaisseur de la couche de peinture ;
- Les particules conductrices ont toutes sensiblement la même longueur;
- Les particules conductrices sont en acier magnétique, en nickel ou en phosphure de fer ;
- La proportion des particules conductrices dans le film sec de la peinture est comprise entre 30 et 95 % ;
- Le substrat métallique est en acier revêtu d'une couche d'un revêtement anti-corrosion ;
- Le substrat métallique est en aluminium ou en alliage d'aluminium.

Les caractéristiques et avantages apparaîtront mieux à la suite de la description qui va suivre, donnée uniquement à titre d'exemple, faite en référence aux dessins annexés dans lesquels :
- la figure 1 est une vue schématique d'une tôle prépeinte selon l'invention,
- la figure 2 est une vue schématique représentant la mise en oeuvre du procédé de fabrication d'une tôle prépeinte selon l'invention.

La tôle prépeinte selon l'invention est constituée d'un substrat 1 revêtu sur au moins une de ses faces d'une couche 2 de peinture.

La peinture de la couche 2 est une peinture organique chargée de particules 3 conductrices et magnétiques, de forme allongées, orientées perpendiculairement à la tôle.

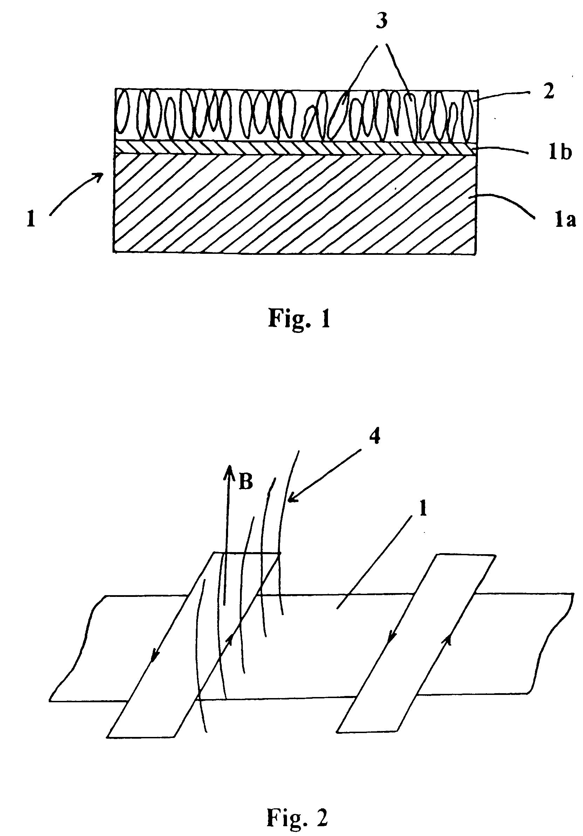

Dans l'exemple de réalisation d'une tôle prépeinte selon l'invention représentée à la Fig. 1, le substrat 1 est une tôle d'acier 1a revêtue d'une couche d'un revêtement anti-corrosion 1b.

Le revêtement anti-corrosion 1b est un revêtement en zinc ou en alliage de zinc, en nickel ou en alliage de nickel, en alliage à base de zinc et d'aluminium déposé soit par électrodéposition, soit par immersion de la tôle dans un bain de matériau liquide constitutif du revêtement.

L'épaisseur de la couche de revêtement 1b est comprise généralement entre 5 et 20 microns.

Dans cet exemple de réalisation, le substrat 1 est revêtu sur une de ses faces d'une couche 2 de peinture, mais il peut être revêtu sur ses deux faces d'une couche 2 de peinture.

Le substrat métallique 1 peut également être une tôle en aluminium ou en alliage à base d'aluminium.

Les particules 3 conductrices de l'électricité et magnétiques peuvent être en un matériau choisi dans la liste non limitative ci-après : acier magnétique, nickel, phosphure de fer.

Ces particules conductrices 3 ont une longueur moyenne sensiblement égale à l'épaisseur de la couche 2 de peinture soit en général une longueur moyenne comprise entre 5 et 25 microns, et ces particules 3 ont toutes sensiblement la même longueur.

Cette condition est nécessaire pour que la tôle prépeinte obtenue soit apte au soudage, essentiellement au soudage par résistance avec une quantité limitée de particules 3 dans la peinture.

Le fait que les particules 3 n'aient pas une longueur absolument égale à l'épaisseur de la couche 2 de peinture n'est pas primordial pour obtenir les qualités de soudabilité par résistance de la tôle prépeinte, car dans ce procédé de soudage, il y a une première phase de mise sous effort des électrodes ou des molettes.

Durant cette phase, les particules de longueur inférieure à l'épaisseur de la couche 2 de peinture sont mises en contact entre le substrat 1 et la surface de contact de l'électrode ou de la molette de soudage.

C'est seulement après cette phase que l'on déclenche le passage du courant de soudage.

La proportion de particules 3 dans le film sec de la peinture pour obtenir une tôle prépeinte ayant une bonne aptitude au soudage doit être comprise entre 30 et 95 %.

L'intérêt d'une telle tôle prépeinte par rapport aux tôles prépeintes de l'art antérieur est que pour des qualités de soudabilité équivalentes, la densité de particules 3 conductrices par unité surfacique de peinture est diminuée, ce qui engendre une augmentation de la résistance entre les électrodes ou les molettes de soudage et de ce fait permet de baisser l'intensité du courant de soudage pour obtenir les mêmes résultats.

Cette densité plus faible de particules 3 conductrices permet également de préserver une certaine souplesse de la couche 2 de peinture et donc son rôle anti-gravillonnage.

Dans le cas des tôles prépeintes dans lesquelles le substrat 1 est une tôle d'acier la revêtue d'une couche 1b de revêtement anti-corrosion, pour une aptitude au soudage équivalente à celle des tôles prépeintes de l'art antérieur, la tenue à la corrosion est augmentée.

Enfin, dans le cas des tôles prépeintes dans lesquelles le substrat 1 est une tôle en aluminium ou en alliage à base d'aluminium, l'intérêt d'une telle tôle prépeinte est que la couche 2 de peinture déposée sur le substrat évite la formation d'alumine et donc évite la pollution des électrodes ou des molettes lors de l'opération de soudage.

Pour obtenir une tôle prépeinte selon l'invention, on enduit un substrat métallique 1 d'une couche 2 de peinture organique chargée de particules 3 conductrices de l'électricité et magnétiques, de formes allongées, on soumet le substrat 1 enduit à un champ magnétique B dont les lignes de champ 4 sont perpendiculaires à la surface du substrat 1 pendant que la peinture est encore liquide, et on polymérise la peinture.

Pendant que le substrat 1 enduit de la couche 2 de peinture chargée des particules 3 est soumis à l'action du champ magnétique B, chaque particule 3 se comporte comme un dipôle et s'oriente dans la direction des lignes de champ 4, c'est-à-dire perpendiculairement à la surface du substrat 1, du fait du couple crée sur les particules par le champ magnétique 4.

La phase d'orientation des particules 3 doit être réalisée pendant que la peinture est encore liquide pour que chaque particule puisse se déplacer dans la peinture.

Pendant la polymérisation de la peinture dont les particules 3 sont orientées, il est nécessaire de maintenir le champ magnétique B afin que cette orientation soit conservée, et de contrôler la puissance du flux magnétique.

Le champ magnétique peut être obtenu par un ou plusieurs aimants permanents ou électroaimants 4 disposés de part et d'autre de la tôle, immédiatement après le dispositif de mise en peinture et se prolongeant dans le four de polymérisation de la peinture lorsque celle-ci nécessite un tel four.

## Revendications

1. Tôle prépeinte constituée d'un substrat métallique (1) revêtu sur au moins une de ses faces d'une couche de peinture organique (2), se présentant sous forme d'une bobine et apte à être mise en forme, soudée et mise en peinture, caractérisée en ce que la peinture (2) est chargée de particules (3) conductrices de l'électricité et magnétiques, de forme allongées, orientées perpendiculairement à la surface de la tôle.

2. Tôle prépeinte selon la revendication 1 caractérisée en ce que la longueur moyenne des particules (3) conductrices est sensiblement égale à l'épaisseur de la couche de peinture (2).

3. Tôle prépeinte selon les revendications 1 et 2 caractérisée en ce que les particules conductrices (3) ont toutes sensiblement la même longueur.

4. Tôle prépeinte selon l'une des revendications 1 à 3 caractérisée en ce que les particules conductrices (3) sont en acier magnétique, en nickel ou en phosphure de fer.

5. Tôle prépeinte selon l'une des revendications 1 à 4 caractérisée en ce que la proportion des particules conductrices (3) dans le film sec de la peinture (2) est comprise entre 30 et 95 %.

6. Tôle prépeinte selon l'une des revendications 1 à 5 caractérisée en ce que le substrat métallique (1) est une tôle d'acier (1a) revêtu d'une couche d'un revêtement anti-corrosion (1b).

7. Tôle prépeinte selon l'une des revendications 1 à 5 caractérisée en ce que le substrat métallique est en aluminium ou en alliage d'aluminium.

## Patentansprüche

1. Vorlackiertes Blech, das aus einem Metallsubstrat (1) besteht, welches auf wenigstens einer seiner Seiten mit einer Schicht eines organischen Anstrichstoffes (2) überzogen ist, das in Form einer Rolle vorliegt und verformt, geschweißt und lackiert werden kann, dadurch gekennzeichnet, daß der Anstrichstoff (2) mit elektrizitätsleitenden und magnetischen Teilchen (3) von länglicher Form gefüllt ist, die senkrecht zur Oberfläche des Bleches ausgerichtet sind.

2. Vorlackiertes Blech nach Anspruch 1, dadurch gekennzeichnet, daß die mittlere Länge der leitenden Teilchen (3) im wesentlichen gleich der Dicke der Anstrichschicht (2) ist.

3. Vorlackiertes Blech nach Anspruch 1 und 2, dadurch gekennzeichnet, daß die leitenden Teilchen (3) sämtlich im wesentlichen die gleiche Länge besitzen.

4. Vorlackiertes Blech nach einem der Ansprüche 1 bis 3, dadurch gekennzeichnet, daß die leitenden Teilchen (3) aus magnetischem Stahl, Nickel oder Eisenphosphid bestehen.

5. Vorlackiertes Blech nach einem der Ansprüche 1 bis 4, dadurch gekennzeichnet, daß der Anteil der leitenden Teilchen (3) in dem trockenen Film des Anstrichstoffes (2) zwischen 30 und 95% beträgt.

6. Vorlackiertes Blech nach einem der Ansprüche 1 bis 5, dadurch gekennzeichnet, daß das Metallsubstrat (1) ein Stahlblech (1a) ist, das mit einer Schicht eines Korrosionsschutzüberzugs (1b) überzogen ist.

7. Vorlackiertes Blech nach einem der Ansprüche 1 bis 5, dadurch gekennzeichnet, daß das Metallsubstrat aus Aluminium oder einer Aluminiumlegierung besteht.

## Claims

1. Prepainted metal sheet, consisting of a metal substrate (1) coated on at least one of its faces with a layer of organic paint (2), being in the form of a reel and capable of being shaped, welded and painted, characterized in that the paint (2) is loaded with electrically conducting and magnetic particles (3), of elongate shape, which are oriented so as to be perpendicular to the surface of the metal sheet.

2. Prepainted metal sheet according to Claim 1, characterized in that the average length of the conducting particles (3) is approximately equal to the thickness of the layer of paint (2).

3. Prepainted metal sheet according to Claims 1 and 2, characterized in that the conducting particles (3) all have approximately the same length.

4. Prepainted metal sheet according to one of Claims 1 to 3, characterized in that the conducting particles (3) are made of magnetic steel, of nickel or of iron phosphide.

5. Prepainted metal sheet according to one of Claims 1 to 4, characterized in that the amount of conducting particles (3) in the dry film of the paint (2) is between 30 and 95%.

6. Prepainted metal sheet according to one of Claims 1 to 5, characterized in that the metal substrate (1) is a steel sheet (1a) coated with a layer of an anticorrosion coating (1b).

7. Prepainted metal sheet according to one of Claims 1 to 5, characterized in that the metal substrate is made of aluminium or of aluminium alloy.
